# FASCICULE DE BREVET EUROPEEN

(11) **EP 0 511 914 B1**
(45) Date de publication et mention de la délivrance du brevet: **15.05.1996**
(21) Numéro de dépôt: 92401209.9
(22) Date de dépôt: 28.04.1992
(51) Int. Cl.: G01S 7/40, G01S 7/48

(54) **Système de mesure de distances à écho avec dispositif de calibration**
Echoabstandmesssystem mit Eichungsvorrichtung
Echo distance measurement system with calibration device

(30) Priorité: 29.04.1991 FR 9105250
(43) Date de publication de la demande: 04.11.1992
(73) Titulaire: ALCATEL N.V., NL-1077 XX Amsterdam (NL)
(72) Inventeur: Maignan, Michel, F-91420 Morangis (FR); Vendrome, Gilles, F-91310 Longpont Sur Orge (FR)
(74) Mandataire: Fournier, Michel

(56) Documents cités:
- FR-A- 2 546 307
- GB-A- 2 003 358
- GB-A- 2 218 588
- US-A- 4 683 473
- IEEE TRANSACTIONS ON MICROWAVE THEORY AND TECHNIQUES. vol. 38, no. 5, Mai 1990, NEW YORK US pages 664 - 666; I. L. NEWBERG ET AL.: 'Long Microwave Delay Fiber- Optic Link for Radar Testing'

## Description

La présente invention concerne de manière générale la mesure de distances et plus particulièrement les radars ou altimètres utilisant l'écho d'ondes d'hyperfréquences.

La calibration précise des radars à très longue portée ou des altimètres embarqués sur satellite est difficilement réalisable à l'aide de cibles actives, ceci parce qu'il est impossible d'utiliser pour cela des lignes à retard hyperfréquence de plusieurs millisecondes.

Dès l'invention du radar, des cibles de calibration ont été utilisées pour la calibration en distance. Ces cibles passives constituées de réflecteurs métalliques doivent avoir une surface équivalente radar suffisante pour que le rapport de puissance entre les échos de la cible et les échos parasites du sol et de l'environnement soit suffisant pour obtenir la précision de calibration souhaitée. Ces cibles sont encombrantes, peu mobiles, coûteuses et souvent dépendantes de la polarisation de l'onde incidente. C'est pourquoi on a développé des cibles de calibration actives constituées d'une antenne de réception et d'une antenne d'émission reliées par un amplificateur. Leur taille est plus petite et la puissance de leurs échos améliore la précision de la calibration. Toutes ces cibles doivent être placées dans le champ du radar ce qu'il n'est pas toujours possible de faire comme par exemple dans le cas d'un radar à grande portée ou d'un radar altimétrique embarqués sur un satellite ou sur un avion. De plus elles sont toujours tributaires des échos de sol. Pour rapprocher la cible du radar il faut la transformer en un simulateur d'échos c'est-à-dire ajouter à une cible une ligne à retard sur le parcours des signaux hyperfréquence.

On peut lire à ce sujet l'article : Delayed-action reflector for external calibration of synthetic aperture radar.K. Komiyama, Electronics letters 30 th March 1989 Vol.25 n°27. p.p. 468.

Les lignes à retard acoustiques ou hyperfréquence électroniques ne permettent pas d'obtenir des retards aussi grands qu'on le souhaiterait. Une réalisation appliquée aux radars est décrite dans le brevet US-A-4 683 473. Elle consiste à utiliser une ligne à retard qui peut être rebouclée sélectivement sur elle-même de façon à augmenter le retard servant à calibrer le radar. La sortie de la ligne à retard est reliée à un amplificateur servant à compenser les pertes dans la boucle. Cette solution purement électronique ne permet cependant pas d'obtenir des retards très importants car le nombre de rebouclages du signal est limité par le cumul des distorsions se produisant à chaque passage du signal dans la boucle. C'est pourquoi il a été proposé d'utiliser pour la calibration des lignes à retard optique constituées de fibres optiques retardatrices de grande longueur. La faible atténuation de la fibre optique permet de réaliser des retards importants et sa grande bande passante permet de faire porter le signal hyperfréquence directement par l'onde optique, sans changement de fréquence.

Il est aussi intéressant de noter que le retard ainsi réalisé est insensible au type de l'impulsion radar en raison de la grande bande passante de la fibre optique.

On peut lire à ce sujet les articles suivants : - Wideband 150 µs optical delay line for satellite altimetric radar checking, M. Maignan, J.J. Bernard, P. de Chateau Thierry, Electronics letters 7 th July 1988, Vol.24 N°14.p.p. 902. - Radar applications of X-band fiber optic links.I.L. Newberg, C.M. Gee, G.D. Thurmond, 0149-645X/88/0000-0987$01.00 c 1988 IEEE. - Long Microwave delay fiber-optic link for radar testing. I.L. Newberg, G.D. Thurmond. W, Yen, IEEE Transactions on microwave theory and techniques Vol. 38, N°. 5, May 1990.

La demande de brevet FR-A-2 546 307 décrit un simulateur de portée pour tester un télémètre laser. Le simulateur utilise une fibre optique rebouclée servant à fournir une série d'impulsions retardées en réponse à une impulsion de sortie du télémètre. Cette réalisation purement optique concerne exclusivement le calibrage d'un télémètre laser dans lequel on dispose d'une source laser puissante. Cette solution n'est donc pas adaptée pour calibrer des systèmes de mesure de distance impliquant des signaux non optiques tels que des signaux hyperfréquence.

Ainsi l'invention a notamment pour but de réaliser un calibrage pour un système de mesure de distance impliquant des signaux électriques qui permette de simuler des distances d'échos accrues, ceci à l'aide d'une ligne à retard optique. Elle a aussi pour but qu'un dispositif de calibration incluant cette ligne soit léger et peu encombrant. De telles qualités permettent en effet d'intégrer le dispositif au système de mesure dans le cas où celui-ci est constitué d'un seul ensemble solidaire.

Aussi l'invention a pour objet un dispositif de calibration pour système de mesure de distances du type comportant :
- des moyens d'émission de mesure fournissant un signal initial de mesure de nature électrique et pour émettre une onde de départ,
- des moyens de réception de mesure pour recevoir une onde de retour constituée par un écho de ladite onde de départ et pour fournir un signal final de mesure de nature électrique,
- un chronomètre de mesure pour recevoir un signal initial de comptage constitué par ledit signal initial de mesure et pour recevoir un signal final de comptage constitué soit par ledit signal final de mesure, soit par un signal final de calibration, ledit dispositif de calibration comportant :
- un moyen optique pour fournir un signal initial optique en réponse à ladite onde de départ.
- une ligne à retard à fibre optique reliée en entrée audit moyen optique et reliée en sortie à un ensemble détecteur pour fournir un signal retardé de nature électrique, ledit dispositif de calibration étant caractérisé en ce que ladite ligne à retard comporte une fibre optique disposée en boucle et munie d'un amplificateur optique et un coupleur pour injecter dans cette fibre ledit signal initial optique, pour réinjecter dans cette fibre et en extraire au moins une fraction d'un signal optique qui y a circulé, ladite fraction extraite étant transmise audit ensemble détecteur
   et en ce que un sélecteur de signal est relié à la sortie dudit ensemble détecteur pour fournir ledit signal final de calibration.
   Un tel dispositif à boucle à retard optique peut être utilisé non seulement pour réaliser des cibles actives de calibration des radars à longue portée dans des conditions protégées, mais aussi pour calibrer un radar en opération sans avoir pour cela à émettre un signal décelable de l'extérieur (on peut utiliser alors un commutateur de voies). Deplus, une utilisation embarquée sur satellite peut être envisagée pour étalonner un radar d'altimétrie avec précision.

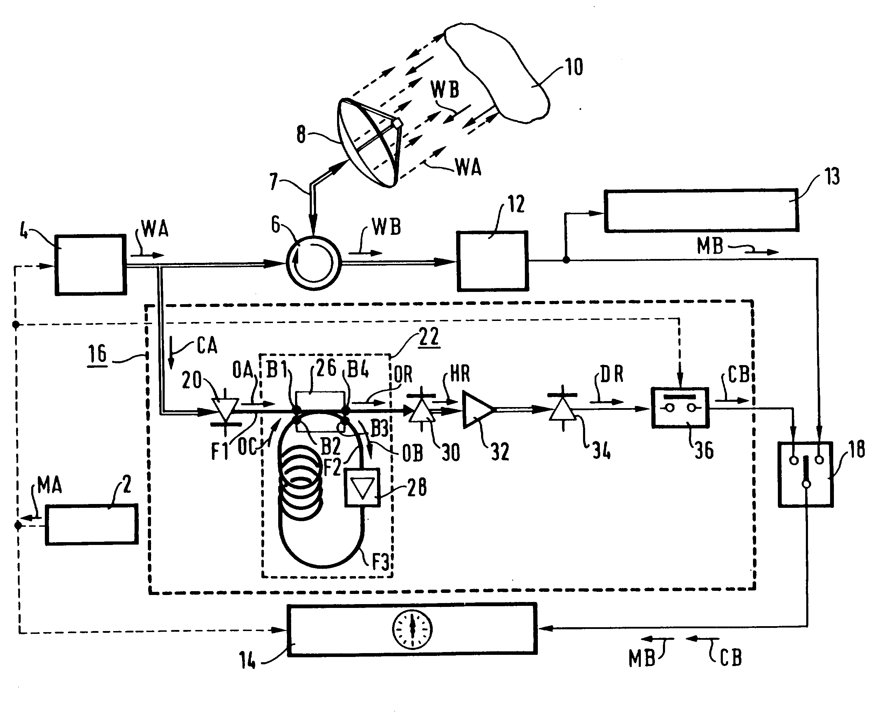

A l'aide de la figure ci-jointe on va maintenant décrire à titre non limitatif comment la présente invention peut être mise en oeuvre.

Cette figure représente une vue d'ensemble d'un système selon la présente invention.

Ce système comporte des moyens d'émission 2, 4, 6, 8. Ces moyens seront appelés par la suite "moyens d'émission de mesure". Ils fournissent un signal initial de mesure MA de nature électrique et émettent une onde de départ WA constituée d'un rayonnement d'exploration et modulée en relation temporelle connue avec ce signal. Plus particulièrement, ils comportent un générateur d'impulsion 2 qui fournit le signal de mesure sous la forme d'une impulsion brève, et un émetteur hyperfréquence 4 qui fournit en réponse l'onde de départ. Un guide d'onde 5 conduit cette onde à un duplexeur 6 qui la conduit, par l'intermédiaire d'un guide 7, à une antenne 8.

Le système comporte aussi des moyens de réception dits "de mesure" 8, 6, 12. Ces moyens reçoivent une onde de retour WB constituée par un écho de l'onde de départ renvoyée par une cible 10. Ils fournissent en réponse un signal final de mesure MB de nature électrique en relation temporelle prédéterminée avec cette onde de retour.

Plus particulièrement l'antenne 8 reçoit l'onde renvoyée par la cible 10 et la dirige, à travers le guide 7, le duplexeur 6 et un guide 11, vers un récepteur hyperfréquence 12 qui fournit le signal final de mesure MB. Ce signal est notamment traité dans un dispositif de traitement auxiliaire 13 permettant la mesure de paramètres de la cible autres que sa distance, suivant les besoins de l'utilisateur.

Un chronomètre de mesure 14 est disposé pour recevoir d'abord un signal initial de comptage MA qui, au moins dans une configuration de mesure du système, est constitué par le signal initial de mesure MA. Ce chronomètre reçoit ensuite un signal final de comptage qui, dans cette même configuration de mesure, est constitué par le signal final de mesure MB. Il a pour fonction de fournir une valeur représentative du retard présenté par ce signal final de comptage par rapport à ce signal initial de comptage. Cette valeur sera appelée ci-après "valeur de retard". Dans cette configuration de mesure, cette valeur de retard est représentative de la distance de la cible 10.

Plus particulièrement ce signal initial de comptage est toujours constitué par le signal initial de mesure MA.

Le dispositif de calibration 16 du système est conçu pour recevoir un signal initial de calibration CA et pour fournir au moins un signal final de calibration CB présentant un retard calibré connu par rapport à ce signal initial de calibration. Ces signaux initial et final de calibration constituent lesdits signaux initial et final de comptage dans une configuration de calibration du système. Ils permettent alors d'effectuer une opération de calibration qui calibre le chronomètre de mesure 14 et au cours de laquelle ledit signal final de calibration constitue une simulation d'un dit écho.

La structure interne de ce dispositif de calibration sera précisée plus loin.

Des moyens de commutation de configuration permettent de placer le système, alternativement ou simultanément, dans ses configurations de mesure et de calibration. Ces moyens sont plus particulièrement constitués par un commutateur de voies 18 dans le cas où le système de mesure comporte un corps unique. Ils pourraient cependant être constitués autrement, par exemple par des moyens d'activation d'une cible de calibration active, dans le cas où le système de mesure comporterait une telle cible.

Le commutateur de voies 18 reçoit le signal final de mesure MB et le signal final de calibration CB et dirige soit l'un soit l'autre de ces signaux vers le chronomètre 14 pour constituer le signal final de comptage.

Le dispositif de calibration 16 comporte un moyen optique 2O pour fournir un signal initial optique OA en relation de temps prédéterminée avec le signal initial de calibration CA. Plus particulièrement ce moyen optique est un émetteur optique qui reçoit une fraction de l'onde émise par l'émetteur hyperfréquence 4 en réponse au signal initial de mesure MA. Ce dernier est émis au début du processus de calibration comme au début d'un processus de mesure de distance. Cette fraction constitue le signal initial de calibration CA.

Comme connu le dispositif de calibration comporte encore une ligne optique à retard (F2, F3) constituée d'au moins une fibre optique. Une telle ligne présente une entrée B3 pour recevoir des signaux d'entrée de ligne tels que le signal initial optique OA. Elle présente aussi une sortie de ligne B2 sur laquelle elle fournit un signal de sortie de ligne OC en réponse à chacun de ces signaux d'entrée de ligne, ceci avec un retard de ligne calibré par rapport à ce signal d'entrée de ligne. Ce signal de sortie de ligne donne naissance à un signal retardé optique OR.

La structure interne de cet organe est propre à la présente invention et lui permet de fournir non seulement une mais plusieurs tels signaux retardés optiques. Elle sera précisée plus loin.

Un ensemble détecteur reçoit chaque signal retardé optique OR. Il fournit en réponse un signal retardé détecté DR, le signal final de calibration CB étant constitué par un tel signal retardé détecté.

Conformément à la présente invention la ligne optique à retard est comprise dans une boucle optique à retard 22 qui comporte aussi un coupleur optique 26. Ce coupleur comporte une première borne B1 constituant une entrée de boucle pour recevoir le signal initial optique OA. Une deuxième borne B2 constitue ladite sortie de ligne pour recevoir les signaux de sortie de ligne OC. Une troisième borne B3 constitue ladite entrée de ligne pour injecter dans la ligne à retard optique une fraction circulante du signal initial optique et de chacun des signaux sortie de ligne de manière que les fractions ainsi injectées constituent lesdits signaux d'entrée de ligne OB ce qui réalise une recirculation des signaux. Le retard de ligne constitue alors un retard élémentaire. Le coupleur 26 présente enfin une quatrième borne B4 constituant une sortie de boucle pour fournir une succession de signaux retardés optiques OR constitués respectivement par des fractions sortantes des signaux de sortie de ligne OC. Ces signaux retardés optiques présentent, par rapport au signal initial optique OA, des retards calibrés égaux au retard élémentaire multiplié par les nombres entiers successifs.

La boucle 22 comporte encore un amplificateur de boucle 28 qui est un amplificateur optique inséré en série pour compenser partiellement les pertes d'énergie que les signaux d'entrée et de sortie de ligne subissent dans cette boucle et dans le coupleur optique.

Plus particulièrement la ligne optique à retard est constituée d'une première fibre optique F2 alimentant l'amplificateur 28 et d'une deuxième fibre F3 de même longueur alimentée par cet amplificateur.

L'ensemble détecteur 3O, 32, 34 reçoit les signaux retardés optiques OR et fournit en réponse une succession correspondante de signaux retardés détectés DR. Plus particulièrement cet ensemble comporte un détecteur optique 3O pour fournir un signal hyperfréquence retardé HR en réponse à chaque signal optique retardé OR, un amplificateur hyperfréquence 32 pour amplifier ce signal hyperfréquence retardé, et un détecteur hyperfréquence 34 pour fournir un signal retardé détecté en réponse à ce signal hyperfréquence retardé HR.

Le dispositif de calibration comporte encore un sélecteur de signal 36 recevant cette succession de signaux retardés détectés DR et arrêtant une fraction initiale de cette succession. Le premier signal retardé détecté qui n'est pas arrêté est transmis en sortie du dispositif de calibration 16 pour constituer le signal final de calibration CB.

Ce sélecteur de signal 36 est déclenché par un signal de déclenchement de sélection MA en relation temporelle connue avec le signal initial de calibration CA pour sélectionner le signal final de calibration CB dans la succession de signaux retardés détectés DR. Plus particulièrement ce signal de déclenchement de sélection est constitué par le signal initial de mesure MA.

La sélection du signal final de calibration peut se faire grâce à un comptage des signaux retardés détectés. Le sélecteur 36 arrête alors par exemple les quatre premiers signaux retardés détectés et laisse passer le cinquième pour constituer le signal final de calibration qui va arrêter le chronomètre 14. Le nombre de signaux arrêtés est réglable. Cette sélection peut se faire aussi en arrêtant les signaux retardés détectés pendant un laps de temps prédéterminé réglable qui n'a pas besoin d'être déterminé avec une grande précision puisqu'il doit seulement se terminer dans l'intervalle entre deux signaux retardés détectés successifs.

Le retard présenté par le signal final de calibration CB par rapport au signal initial de calibration CA est ainsi rendu égal à un nombre entier réglable de retards élémentaires calibrés.

A titre d'exemple l'émetteur optique 20 peut être constitué par un semiconducteur modulable par le courant. Sa puissance d'émission vaut 1 mW optique et est injectée dans une fibre F1 en entrée du coupleur optique 26. La densité de bruit d'intensité est de -150 dBm/Hz.
Le coupleur optique 26 peut présenter les taux de couplage suivants :
- de la borne B1 vers la borne B4 : 45%
- de la borne B1 vers la borne B3 : 45%.

L'amplificateur optique 28 peut être constitué par une fibre optique dopée à l'erbium et pompée optiquement. Il peut alors avoir les caractéristiques suivantes :
- gain = 22 dB
- densité de puissance d'émission spontanée = - 20 dBm/nm
- largeur du filtre optique = O,3 nm.

Les fibres optiques F2 et F3 peuvent être longues chacune de 50 km, avoir une atténuation de 0,2 dB/km, et un temps de propagation de cinq microsecondes par kilomètre pour obtenir un retard élémentaire de 5OO microsecondes.

Le détecteur optique 30 peut être constitué par une photodiode chargée par une impédance de 50 ohms.

Dans ces conditions, si l'on module l'émetteur 20 par un signal CA en forme d'impulsion sinusoidale de puissance moyenne de l'ordre + 10 dBm, on obtient une suite de signaux hyperfréquence détectés HR en forme d'impulsions dont les puissances aux bornes de la photodiode 30 sont environ comme suit :
- pour la première impulsion -30 dBm
- pour chacune des impulsions suivantes : La puissance de l'impulsion précédente diminuée de 3 dB.

Le bruit dans ces conditions a une densité de puissance d'environ de -150 dBm/Hz.

## Revendications

1. Dispositif de calibration pour système de mesure de distances du type comportant :
- des moyens d'émission de mesure (2, 4, 6, 8) fournissant un signal initial de mesure (MA) de nature électrique et pour émettre une onde de départ (WA),
- des moyens de réception de mesure (8, 6, 12) pour recevoir une onde de retour (WB) constituée par un écho de ladite onde de départ et pour fournir un signal final de mesure (MB) de nature électrique,
- un chronomètre de mesure (14) pour recevoir un signal initial de comptage constitué par ledit signal initial de mesure (MA) et pour recevoir un signal final de comptage (MB, CB) constitué soit par ledit signal final de mesure (MB), soit par un signal final de calibration (CB), ledit dispositif de calibration (16) comportant :
- un moyen optique (20) pour fournir un signal initial optique (OA) en réponse à ladite onde de départ (WA)
- une ligne à retard à fibre optique reliée en entrée audit moyen optique (20) et reliée en sortie à un ensemble détecteur (30, 32, 34) pour fournir un signal retardé (DR) de nature électrique, ledit dispositif de calibration étant caractérisé en ce que ladite ligne à retard comporte une fibre optique (F2, F3) disposée en boucle et munie d'un amplificateur optique (28) et un coupleur (26) pour injecter dans cette fibre ledit signal initial optique (OA), pour réinjecter dans cette fibre et en extraire au moins une fraction d'un signal optique qui y a circulé, ladite fraction extraite étant transmise audit ensemble détecteur ) (30, 32, 34) et en ce qu'un sélecteur de signal (36) est relié à la sortie dudit ensemble détecteur (30, 32, 34) pour fournir ledit signal final de calibration (CB).

2. Système selon la revendication 1, caractérisé par 5 le fait que ladite onde de départ (WA) est une onde hyperfréquence.

3. Système selon la revendication 1, caractérisé par le fait que ledit sélecteur de signal (36) est déclenché par un signal de déclenchement de sélection (MA) en relation temporelle connue avec ladite onde de départ (WA).

## Patentansprüche

1. Eichvorrichtung für ein Entfernungs-Meßsystem
- mit Meßsignal-Sendemitteln (2, 4, 6, 8), die ein Meßstartsignal (MA) elektrischer Art liefern und eine Startwelle (WA) aussenden,
- mit Meßsignal-Empfangsmitteln (8, 6, 12), die eine Echowelle (WB) empfangen, die von einem Echo der Startwelle gebildet wird, und die ein Meßendesignal (MB) elektrischer Art liefern,
- mit einem Meßchronometer (14), der ein Zählstartsignal bestehend aus dem Meßstartsignal (MA) und ein Zählendesignal (MB, CB) bestehend entweder aus dem Meßendesignal (MB) oder aus einem Eichendesignal (CB) empfängt,
wobei die Eichvorrichtung (16) aufweist:
- ein optisches Mittel (20), das ein optisches Startsignal (OA) aufgrund der Startwelle (WA) liefert,
- eine Lichtfaser-Verzögerungsleitung, die eingangsseitig an das optische Mittel (20) und ausgangsseitig an eine Detektoreinheit (30, 32, 34) angeschlossen ist, welche ein verzögertes Signal (DR) elektrischer Art liefert,
dadurch gekennzeichnet, daß die Verzögerungsleitung eine Lichtleitfaser (F2, F3) in Form einer Schleife und mit einem optischen Verstärker (28) und einem Koppler (26) enthält, der in diese Lichtleitfaser das optische Startsignal (OA) einspeist und zumindest ein Teil eines durch die Schleife gelaufenen optischen Signals erneut in diese Faser einspeist und aus ihr entnimmt, wobei der entnommene Anteil an die Detektoreinheit (30, 32, 34) übertragen wird, und daß ein Signalauswahlorgan (36) an den Ausgang der Detektoreinheit (30, 32, 34) angeschlossen ist, das das Eichendesignal (CB) liefert.

2. System nach Anspruch 1, dadurch gekennzeichnet, daß die Startwelle (WA) eine Mikrowelle ist.

3. System nach Anspruch 1, dadurch gekennzeichnet, daß das Signalauswahlorgan (36) von einem Wählauslösesignal (MA) ausgelöst wird, das in einer bekannten zeitlichen Relation mit der Startwelle (WA) steht.

## Claims

1. Calibration apparatus for a distance-measuring system of the type comprising:
measurement transmission means (2, 4, 6, 8) for providing an initial measurement signal (MA) that is electrical and for transmitting a go wave (WA);
measurement reception means (8, 6, 12) for receiving a return wave (WB) constituted by an echo of said go wave and for providing an electrical final measurement signal (MB);
a measurement chronometer (14) for receiving an initial count signal constituted by said initial measurement signal (MA) and for receiving a final count signal (MB, CB) constituted either by said final measurement signal (MB), or by a final calibration signal (CB), said calibration apparatus (16) comprising:
optical means (20) for providing an initial optical signal (OA) in response to said go wave (WA);
an optical fiber delay line connected at the input to said optical means (20) and connected at the output to a detector assembly (30, 32, 34) for providing a electrical delayed signal (DR), said calibration apparatus being characterized in that said delay line includes an optical fiber (F2, F3) disposed in a loop and provided with an optical amplifier (28) and a coupler (26) for injecting said initial optical signal (OA) in said fiber, for reinjecting in said fiber and extracting therefrom at least a fraction of an optical signal which has circulated therein, said extracted fraction being transmitted to said detector assembly (30, 32, 34), and in that a signal selector (36) is connected at the output of said detector assembly (30, 32, 34) for providing said final calibration signal (CB).

2. A system according to claim 1, characterized by the fact that said go wave (WA) is a microwave.

3. A system according to claim 1, characterized by the fact that said signal selector (36) is triggered by a selection trigger signal (MA) having a known time relationship with said go wave (WA).
